# EUROPÄISCHE PATENTSCHRIFT

(11) **EP 1 132 344 B1**
(45) Veröffentlichungstag und Bekanntmachung des Hinweises auf die Patenterteilung: **18.08.2004**
(21) Anmeldenummer: 01104814.7
(22) Anmeldetag: 27.02.2001
(51) Int. Cl.: C02F 1/00

(54) **Energie-Sattler zur Verhinderung von Kalk- und Rostablagerungen in Wasserleitungen und Einrichtungen**
Attachable energy body for prevention of scaling and corrosion in water conduits and installations
Corps énergétique à attacher pour la prévention de corrosion et de dépôt dans des conduites et des installations d'eau

(30) Priorität: 03.03.2000 DE 10010644
(43) Veröffentlichungstag der Anmeldung: 12.09.2001
(73) Patentinhaber: Wempe, Karina, 49401 Damme (DE); Oesting, Rainer, Dipl.-Ing., 49434 Neuenkirchen (DE); Healey, Sonja, 49401 Damme (DE)
(72) Erfinder: Wempe, Karina, 49401 Damme (DE); Oesting, Rainer, Dipl.-Ing., 49434 Neuenkirchen (DE); Healey, Sonja, 49401 Damme (DE)

(56) Entgegenhaltungen:
- EP-A- 0 497 754
- EP-A- 0 776 694
- DE-U- 8 514 037
- DE-U- 29 701 619
- DE-U- 29 714 201
- DE-U- 29 913 955

## Beschreibung

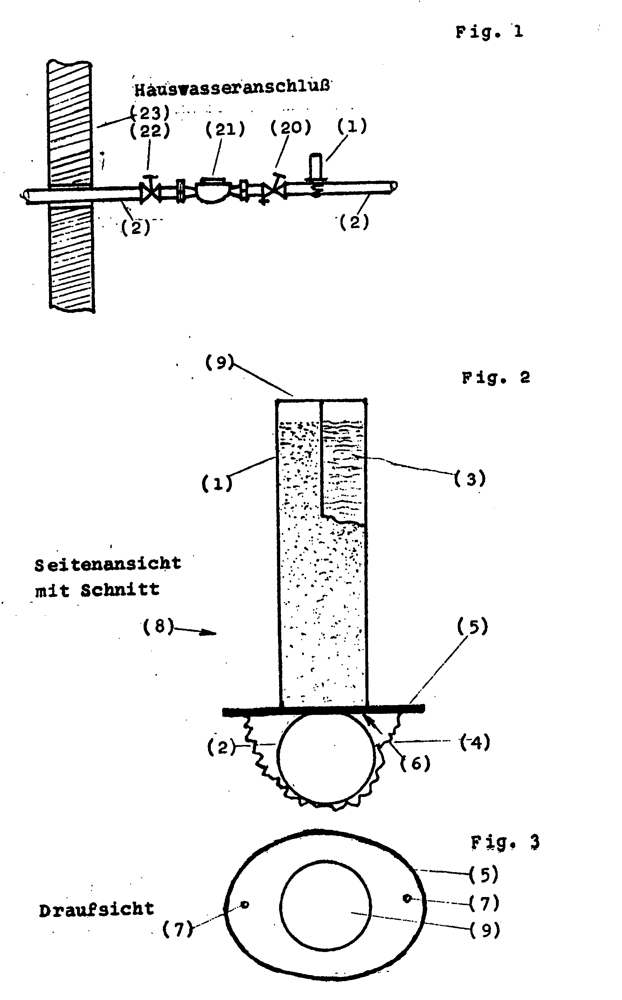

Der Energie-Sattler (1) Fig. 2 ist eine Erfindung zur Verhinderung von Kalk- und Rostablagerungen in Rohrleitungen, Armaturen, Gefäße, Behälter, Maschinen, Heizungsanlagen, sanitäre Einrichtungen und vieles mehr, die mit kalkhaltigem Wasser in Berührung kommen. Bereits eine vorhandene Kalkablagerung und Verkrustung in Altanlagen wird durch den Energie-Sattler (1) Fig.2 langsam abgebaut, wobei die Rohrwandungen mit einer Schutzschicht überzogen wird.

Der Stand der Technik ist, daß es eine ganze Reihe von Geräten gibt, die zur Verhinderung von Kalk- und Rostablagerungen eingesetzt werden. Grundsätzlich gibt es zwei Arten von Möglichkeiten das Kalkproblem zu lösen. Und zwar; durch Salz und Chemie und die chemiefreie Art erfolgt mit Hilfe von elekt. Strom und Magnetspulen / Wicklungen oder mit Hilfe von Hohl- Ring- oder Flachmagneten, bzw. auswechselbare Kartuschen als Ionen-Austauscher (Zink-Opferanode), z.B. ION ScaleBuster - Europäisches Patent Nr. 0680457.
Dabei ist es allerdings nötig, in allen der vgt. Systeme, einen Eingriff in das Rohrleit ungsnetz vorzunehmen durch einen konzessionierten Installations-Fachbetrieb. Das ist beim Neu- oder Altbau ein ganz erheblicher Kostenfaktor. Bei manchen Fabrikaten wird vom Hersteller sogar vorgeschrieben, sowohl in der Kaltwasserleitung und in der Warmwasser-Zirkulationsleitung, je ein Gerät zu installieren. Das bedeutet 2 Geräte in einer Anlage. Hinzukommt, in gewissen Zeitabständen der Kartuschenwechsel und teilweise Aufwand von Elektro-Istallatiosnarbeiten. Nicht zu vergessen sind die ständig anfallenden Stromkosten und Wartungsarbeiten.

Der Stand der Technik ist bekannt, mit "D1" - EP 0 497 754 A1 - und "D2" - EP 0 776 694 A2 -

In "D1" soll Kalk- und Rostablagerungen in Rohrleitungen verhindert werden, durch eine oder mehrere ums Rohr gelegte Kammern, mit aktiviertem Wasser, und als ganzer Bausatz (5) mit Rohrkrümmern, wie die Fig. 4 auf Seite 5 darstellt. Um die Leistung zu erhöhen, können die Baueinheiten (5) in beliebiger Zahl seriell hintereinander oder parallel zu einander in eine Rohrleitung eingebaut werden, Seite 2, Zeile 48 - 5

In "D2" soll ebenfalls Kalk- und Rostablagerungen in Rohrleitungen verhindert werden, durch einen oder mehrere an das Wasserrohr angelegten röhrenförmigen

Aufnahmekörper, mit Quarz- bzw. Gesteinsmehl als Inhalt gefüllt.
Um die Leistung zu erhöhen, sind in Fig. 11, Seite 12, 9 Aufnahmekörper angebracht.

Gegenstand der vorliegenden Erfindungen sind in "D1" zahlreiche ums Rohr gelegte Kammern, für jeweils unterschiedliche Rohrdurchmesser, bzw. Baueinheiten (5) mit dem erforderlich werdenden Eingriff ins Rohrleitungs-System.

In "D2" werden zahlreiche Aufnahmekörper für Quarz- bzw. Gesteinsmehl benötigt, falls es die Räumlichkeiten und der Platzbedarf zulässt.

Die Problemlösung ist, eine erfinderische Vorrichtung zu schaffen, die es ermöglicht, mit nur 1 Gerät, auf engstem Raum, ohne Eingriff ins Rohrleitungs-System, stromlos und chemiefrei, mit einfacher Befestigung, ohne spätere Wartung - Kalk- und Rostablagerungen in Rohrleitungen, Boiler, Geräte usw. zu verhindern.

Diese Aufgabe wird erfolgreich mit dem "Energie-Sattler " erfindungsgemäß gelöst, durch

Anordnung (8), - bestehend aus einem zylinderförmigen, hermetisch abgeschlossenen Mediumkörper (1) Fig. 1+2, der mit positiv polarisiertem Wasser (3) Fig. 2, gefüllt ist, einen Oval-Flansch (5) Fig.2+3, der mit dem Mediumkörper (1) Fig. 2, verbunden ist und der Stellen aufweist, an denen eine VA-Feder befestigt werden kann, und einer VA-Feder (4) Fig. 2, mit der der Oval-Flansch (5) Fig.2, mit dem aufliegenden Mediumkörper (1) Fig. 1+2 derart auf ein Wasserrohr (2) Fig. 1+2 gespannt werden kann, dass sich der Oval-Flansch (5) Fig. 2 zwischen Mediumkörper (1) Fig. 2 und Wasserleitungsrohr (2) Fig. 1+2 befindet.
Der "Energie-Sattler " ist stehend und frei zu allen Seiten, für die Energie-Aufnahme, auf das Wasserleitungsrohr aufgesattelt, mit Fig. 1 + 2 sichtbar offenbart.

Der Energie-Sattler (1) Fig.1 funktioniert vollkommen stromlos und chemiefrei und muß nicht in ein Rohrleitungssystem eingebaut werden, zudem werden keine weiteren Wartung- und Betriebskosten verursacht. Der Energie-Sattler (1) Fig.1 wird ganz einfach aufs Rohrsystem aufgesattelt (aufgespannt). Der Mediumkörper (1) Fig.2 ist hermetisch verschlossen und kann aus Kunststoffmaterial, Metall, Glas oder Porzellan sein. Das benutzte (6) ist Medium K₂O (3) Fig.2 ist positiv polarisiert und wirkt vollkommen isoliert im Mediumkörper (1) Fig.2 bei Ausnutzung der statischen Energie. Sobald der Energie-Sattler (1) Fig.1 mit dem eingeschlossenem Medium H₂O (3) Fig.2 positiv polarisiert, auf die Wasserleitung aufgesetzt wird, überträgt sich diese positive Polarisation mit Hilfe der statischen Energie auf das gesamte Wasserleitungsnetz , Kalt und Warm, in Fließrichtung. Durch die positive Polarisation des Wassers setzen sich keine Kalkkristalle an die Rohrwandungen fest. Das gesamte Trinkwasser bleibt dadurch unverändert. Der Kalk bleibt im Wasser, aber nicht an den Wandungen der Rohrleitungen, Armaturen ect.. Selbst bei Temperaturen über den Siedepunkt gibt es keine Beeinträchtigung.

Eine ganz wichtige Rolle bei der positiven Polarisierung mit dem Energie-Sattler (1)-Fig.1, bewirkt die unerschöpfliche statische Energie, ohne diese kein Erfolg . Als Beweis zeigt ein ganz einfacher Versuch mit einer leeren Konservendose (Metall), die über einen in Betrieb befindlichen Energie-Sattler gestülpt wird. Sofort wird die Betriebsfunktion unterbrochen, aber auf keinen Fall ausgelöscht Beim entfernen der Konservendose ist die Betriebsfunktion des Energie-Sattlers wieder voll hergestellt.
Der Oval-Flansch (5) Fig. 2 kann mit dem kompl. Energie-Sattler (1) Fig.2 auf engstem Raum der Rohrleitung mit der VA-Feder (4) Fig.2 aufgespannt werden. Selbst die Überwurfmutter der Wasseruhr ist bei Platzmangel ausreichend, den Energie-Sattlrer zu befestigen.
Dieses sind eindeutige Vorteile: keinen Eingriff ins Rohrsystem, kein separater Stromanschluß, keine Wartung- und Betriebskosten, kein Verbrauchsmaterial (Kartuschen), keine Funktions-Beeinträchtigung durch das Magnetfeld der Umwälzpumpe in der Warmwasser-Zirkulationsleitung (somit keine 2 Geräte und mehr - in 1 Anlage), keine Funktions-Beeinträchtigung durch Temperaturen über den Siedepunkt, keine Anbringungsschwiengkeitcn *als Haus-Eigentümer, Etagen-Eigentumswohnung, oder als* Mieter.
Weitere Einsatzmöglichkeiten im Gewerbe und Industrie, Getränkebereich, Lebensmittelbranche, im medizinischem Bereich, Sport- und Badeanstalten, offene und geschlossene Gewässer (Teiche, Flüsse, kleine Binnengewässer), praktisch überall dort wo gesundes Leben vom Wasser abhängig ist.

### Zeichenerklärung

Fig. 1
   - 1: Mediumkörper / Energie-Sattler
   - 2: Wasserleitungsrohr
   - 20: Schrägsitzventil mit Rückflußverhinderer und Prüfhahn
   - 21: Wasserzähler mit Überwurfmuttern
   - 22: Absperrschieber
   - 23: Außenmauer mit Rohrdurchführung
Fig. 2
   - 1: Mediumkörper / Energie-Sattler
   - 2: Wasserleitungsrohr
   - 3: Medium H₂O positiv polarisiert
   - 4: VA-Feder
   - 5: Oval-Flansch
   - 6: keine feste Rohrverbindung zum Energie-Sattler
   - 8: Anordnung
   - 9: Verschluß des Mediumkörper
Fig. 3
   - 5: Oval-Flansch
   - 7: Stellen für eine Befestigung der VA-Feder
   - 9: Verschluß des Mediumkörpers

## Patentansprüche

1. Anordnung (8) bestehend aus einem zylinderförmigen, hermetisch abgeschlossenen Mediumkörper (1), der mit positiv polarisiertem Wasser (3) gefüllt ist, einem Oval-Flansch (5), der mit dem Mediumkörper (1) verbunden ist, und der Stellen (7) aufweist, an denen eine VA-Feder befestigt werden kann,
und einer VA-Feder (4) mit der der Oval-Flansch (5) mit dem aufliegenden Mediumkörper (1) derart auf ein Wasserleitungsrohr (2) gespannt werden kann, dass sich der Oval-Flansch (5) zwischen Mediumkörper (1) und Wasserleitungsrohr (2) befindet.

## Claims

1. Formation (8) consisting of a cylindrical, hermetically sealed- off medium- body (1), which is filled with positively polarised water (3), an oval- flange (5) connected to the medium- body (1) and having facilities (7), to which a high- grade steel spring can be fixed, and a high- grade steel spring (4) by means of which the oval- flange (5) with the medium- body (1) fixed on it, can be clamped onto a water- pipe (2) in such way that the oval flange (5) is situated between medium-body (1) and water- pipe (2).

## Revendications

1. Formation (8) qui consiste d'un corps à substances cylindrique (1), étant fermé hermétiquement et rempli d'eau polarisée positivement (3), d'un collet ovale (5) relié au corps à substances (1) ayant des dispositifs (7) pour fixer un ressort en acier affiné, et un ressort en acier affiné (4) par lequel le collet ovale (5) avec le corps à substances (1) y mis dessus, peuvent être serrés sur un tuyau d'eau (2) d'une telle manière que le collet ovale (5) se trouve entre le corps à substances (1) et le tuyau d'eau (2).
